# EUROPEAN PATENT APPLICATION

(11) **EP 0 779 232 A1**
(43) Date of publication of application: **18.06.1997**
(21) Application number: 96203297.5
(22) Date of filing: 25.11.1996
(51) Int. Cl.: B65H 27/00, F16C 13/00, G03D 3/13, G03D 15/02

(54) **Photographic sheet material processing apparatus with nip forming roller containing potassium titanat whiskers in an outer region**

(30) Priority: 13.12.1995 EP 95203467
(71) Applicant: AGFA-GEVAERT naamloze vennootschap, 2640 Mortsel (BE)
(72) Inventor: Verlinden, Bart, 2640 Mortsel (BE); van Wijk, Jan, 2640 Mortsel (BE)

(57) **Abstract**

A sheet material handling apparatus such as a photographic sheet material processor, includes at least one pair of rollers biased towards each other to form a nip therebetween through which a sheet material path extends. The apparatus is characterised in that at least one of the rollers comprises an outer region (60) of elastomeric material at least a portion (64) of which contains potassium titanate whiskers. Wear on the roller is thereby reduced.

## Description

### FIELD OF THE INVENTION

The present invention relates to a sheet material handling apparatus, in particular such an apparatus including at least one pair of rollers biased towards each other to form a nip therebetween through which a sheet material path extends. More particularly, the present invention concerns the construction of a roller for use in such an apparatus.

### BACKGROUND OF INVENTION

Sheet material handling apparatus come in many forms, such as printing machines, photographic processing machines, paper forming and treating machines, textile forming and treating machines. In such an apparatus, relatively flexible material, such as paper, textile, metal sheet or synthetic material sheet, usually as a web unwound from a roll or in cut-sheet format, passes through a nip formed by a pair of rollers biased towards each other. For example, an apparatus for the processing of photographic sheet material, such as X-ray film, pre-sensitised plates, graphic art film and paper, and offset plates comprises several vessels each of which contains a treatment liquid, such as a developer, a fixer and a rinse liquid. The sheet material to be processed is transported through these vessels in turn, and thereafter optionally to a drying unit.

It is often convenient that the rollers incorporated in such machines act as drive rollers, serving to advance the sheet material through the apparatus. To meet these demands successfully, the resilience of the rollers is important. Usually such rollers comprise a rigid core having a layer of, for example, elastomeric material positioned over the core. If the elastomeric material is too hard, the pressure exerted by the rollers on the sheet material may not be uniform. Furthermore, where the sheet material is being contacted with treatment liquids, the squeegeeing properties beyond the edges of the sheet material may not be optimum, resulting in an unacceptable level of carry-over. On the other hand, if the elastomeric material is too soft it will quickly become degraded by wear. Wear results from contact between one roller and the other and/or between one roller and the sheet material. Some sheet materials can be particularly wearing on the rollers, especially those sheet materials which include abrasive materials as fillers, such as titania in paper.

### OBJECTS OF INVENTION

It is an object of the present invention to provide a sheet material handling apparatus incorporating a roller which is able to resist wear without significant loss to operating characteristics.

### SUMMARY OF THE INVENTION

According to a first aspect of the invention, there is provided a sheet material handling apparatus including a roller biased towards a reaction surface to form a nip therebetween through which a sheet material path extends, characterised in that the roller comprises an outer region of elastomeric material, at least a portion of which contains potassium titanate whiskers.

The reaction surface towards which the roller is biased to define the nip will usually be the surface of another roller, or for the reaction surface to be in the form of a belt or a fixed surface with a low friction coefficient. Where this general description refers to the use of two rollers, it is to be understood that the second roller may be replaced by any other reaction surface, such as those referred to above.

Such an apparatus is preferably of such a type where the rollers come into contact with a sheet material treatment liquid, in particular such an apparatus adapted for the wet processing of photographic sheet material comprising at least one treatment vessel in which the pair of rollers may be incorporated. Where the reaction surface towards which the roller is biased to define the nip is the surface of another roller, it is preferred that the roller requirements referred to above apply to this, second, roller also.

Thus, according to a second aspect of the invention, there is provide a method of processing photographic sheet material by passing the sheet material along a sheet material path through an apparatus including a roller biased towards a reaction surface to form a nip therebetween through which the sheet material path (120) extends, characterised in that the roller comprises an outer region of elastomeric material, at least a portion of which contains potassium titanate whiskers.

In a conventional such photographic processing apparatus the sheet material is transported along a generally horizontal feed path, the sheet material passing from one vessel to another usually via a circuitous feed path passing under the surface of each treatment liquid and over dividing walls between the vessels.

In a system for the development of aluminium lithographic printing plates of the type disclosed in EP-A-410500 (Agfa Gevaert NV), the apparatus comprises a housing with pairs of processing rollers carried on roller shafts supported within the housing. The processing rollers are positioned substantially parallel and in line contact with each other. Means are provided for feeding photographic sheet material between the rollers. The roller shafts are biased towards each other to exert a pressure on the photographic sheet material as it passes between the rollers.

Processing machines having a substantially vertical orientation have also been proposed, in which a plurality of vessels are mounted one above the other, each vessel having an opening at the top acting as a sheet material inlet and an opening at the bottom acting as a sheet material outlet or vice versa. In the present context, the term "substantially vertical" is intended to mean that the sheet material moves along a path from the inlet to the outlet which is either exactly vertical, or which has a vertical component greater than any horizontal component. The use of a vertical orientation for the apparatus leads to a number of advantages. In particular the apparatus occupies only a fraction of the floor space which is occupied by a conventional horizontal arrangement. Furthermore, the sheet transport path in a vertically oriented apparatus may be substantially straight, in contrast to the circuitous feed path which is usual in a horizontally oriented apparatus. As a consequence of the straight path, the material sensitivity to scratches becomes independent of the stiffness and thickness of the material.

In a vertically oriented apparatus, it is important to avoid, or at least minimise leakage of treatment liquid from one vessel to another and carry-over as the sheet material passes through the apparatus. United States patent US 4166689 (Schausberger et al. assigned to Agfa-Gevaert AG) describes such an apparatus in which liquid escapes form the lower opening and is intercepted by the tank of a sealing device with two squeegees located in the tank above a horizontal passage in line with the lower opening. One or more pairs of drive rollers in the vessel close the lower opening and also serve to transport the sheet material along a vertical path which extends between the openings of the vessel.

In both such forms of processing apparatus, the rollers are used in pairs, biased towards each other, between which the sheet material passes to act as a seal between treatment vessels of the processing apparatus, that is to remove excess treatment liquid from the sheet as it passes from one treatment vessel to the next. This reduces carry-over of treatment liquid and thereby reduces contamination and wastage. A good removal of processing liquid is also required to reduce the drying time of the sheet material after the last process bath, and hence to reduce the energy use.

In a preferred embodiment of the invention, the outer region comprises a sleeve portion and an end portion at one or both ends thereof. The potassium titanate whiskers are contained in either the sleeve portion or in one or both end portions. It is particularly beneficial if the potassium titanate whiskers are contained in the or each end portion of the outer region, when the roller is mounted between sealing surfaces which are in contact with end faces of the roller.

Typical rollers have a core provided with a covering of elastomeric material, although it is possible for the roller to be elastomeric throughout its cross-section. As the sheet material leaves a given liquid treatment vessel it is necessary to remove any liquid carried on the sheet material as efficiently as possible, to prevent carry-over of liquid into a next treatment vessel and to reduce edge effects which arise from non-homogeneous chemistry on the sheet material after squeegeeing. This applies whether the apparatus is of a horizontal or vertical configuration. To do this job properly, the rollers must exert a sufficient and homogeneous pressure over the whole width of the sheet material. Also, to reduce edge effects, it is desirable that the opposite roller surfaces are in contact with each other beyond the edges of the sheet material. To put this problem in context, rollers used in conventional processing apparatus for example have a length of 400 mm or more and a diameter of from 24 to 60 mm. The sheet material typically has a width of from a few millimetres up to 2 m and a thickness of 0.05 mm to 0.5 mm. In view of the nature of elastomeric material, it is in fact impossible to totally eliminate any gap between the roller surfaces at the edges of the sheet material as it passes through the nip. It is desirable that the roller surfaces be in contact with each other within as short a distance as possible from the edges of the sheet material i.e. that the size of the leak zone should be minimised. It is important however that the force between the rollers is sufficient to prevent leakage when no sheet material is passing through. However, the force must not be so high as to risk physical damage to the sheet material as it passes through the nip.

It has been proposed that, in order to equalise the pressure applied by the rollers to the sheet material across the width thereof, the rollers should not have an exactly cylindrical configuration, but rather the roller should be provided with a radial dimension profile which varies along the length thereof. This may be achieved by grinding the elastomer to provide the roller with the predetermined profile.

The potassium titanate whiskers are known in the art as TISMO which is generally expressed by the formula K₂O.nTiO₂, especially TISMO D (n = 8). It is a microfine whisker having a typical whisker diameter of from 0.3 to 0.6 µm and a whisker length of from 10 to 20 µm. While its use in composite plastics materials has been proposed, its beneficial properties when incorporated in the elastomeric outer region of a roller of a sheet material handling apparatus, especially the reduction in the wear of the elastomer and lowering of friction, have not previously been appreciated.

The outer region of the roller may be formed of an elastomeric material selected from ethylene/propylene/diene terpolymers, silicone rubber, polyurethane, thermoplastic rubber, styrene-butyl rubber, nitrile-butyl rubber, the elastomeric material being doped with the potassium titanate whiskers as and where necessary. Surface modifying material selected from PTFE (poly tetra fluoro ethylene) particles, carbon fibres, glass fibres, glass beads and mixtures thereof may be included in the elastomeric material to further modify the surface thereof by reducing wear, lowering friction and enabling self-cleaning.

The potassium titanate may be incorporated in the elastomeric material at a level of from 5% to 30% by weight, such as from 10% to 20%. Higher levels of incorporation may significantly reduce the flexibility of the elastomer. The potassium titanate whiskers may be partially replaced by one or more alternative whiskers materials selected from carbon fibres, and fibres formed of silicon carbide, titanium carbide, boron carbide, alumina, zirconia, zinc oxide, ferrite derivatives, wollastonite, mica, clay materials, silicon nitride, boron nitride and titanium boride, provided that such alternative fibres are not incorporated at such high a level as to have any detrimental effect upon the sheet material or the chemical reactions taking place thereon.

The or each roller may further comprise an inner region of elastomeric material having a hardness lower than that of the outer region. The two regions of elastomeric material will usually be constituted by distinguishable layers, but it is also within the scope of this embodiment of the invention to use a single layer of elastomeric material which is so formed to have a hardness which varies throughout its thickness.

The Shore-A hardness of the inner region may be less than 50, preferably from 15 to 45, while the Shore-A hardness of the outer region may be more than 25, preferably from 40 to 90. Where the inner and outer regions are constituted by distinguishable layers, the difference between the Shore-A hardness of the inner layer and the outer layer may be at least 5, most preferably at least 10. Elastomeric materials having a low Shore-A hardness provide elastomeric properties consistent with the objective of low carry-over, but low molecular weight compounds tend to diffuse in use into the treatment baths so that these elastomeric properties are lost while both chemical and physical wear resistance are low. The provision of the outer region of elastomeric material having a higher Shore-A hardness reduces these negative effects, surprisingly without significantly increasing carry-over and enables grinding to a desired surface quality. More specifically, optimal grinding of the elastomeric material improves the hydrophilicity of the material by stabilising its surface roughness and also reduces the torque required to drive the roller by lowering its rolling resistance. The use of elastomeric materials with relatively high hardness improves the stability to oxygen and ultra violet light, reduces evaporation of elastomeric compounds from the surface and reduces the diffusion of treatment liquids through the material. The performance and useful life of the roller can therefore be optimised.

Preferably, the roller comprises a rigid core, the inner region being an intermediate region positioned over the core. The inner region may be directly in contact with the core and with the outer region. The provision of a rigid core enables drive to be transmitted to the roller in a convenient manner. However the provision of a rigid core is not essential, it being possible to drive the roller externally, by frictional contact between the outer surface of the roller and suitable drive means, such as separate drive rollers.

Preferably, the outer elastomeric material region extends over the end faces of the inner elastomeric material region. This is preferred in order to reduce or prevent degradation of the elastomeric material of the inner region on exposure to treatment liquids.

That portion of the outer region which extends over the end face of the inner region may be so shaped as to provide a space into which the elastomeric material of the covering may be deformed as a result of a sealing force between the roller and a sealing surface of the apparatus.

It is preferred that both the rollers comprise the inner region of elastomeric material having a relatively low hardness, and the outer region of elastomeric material having a relatively high hardness positioned over the inner region. Indeed, it will be usual for two identical rollers to be used. However, it is possible for the second roller to be not so constructed, such as for example, a roller having no elastomeric covering.

Where the inner and outer regions are constituted by distinguishable layers, the inner layer may have a thickness which may be from 5% to 35%, such as from 10% to 20% of the roller diameter, that is at least 1.0 mm, such as from 4 mm to 8 mm for a typical roller having a diameter of 40 mm. The outer region may have a thickness which may be from 1% to 10% of the roller diameter, that is at least 0.2 mm for the typical roller. Below this thickness, the elastomeric effect may be lost, and grinding to a desired profile becomes difficult or impossible. Although it is possible to add further regions, usually no other regions will be present, so that the inner region is directly in contact with the core and with the outer region, although it should be noted that the core may be treated with a primer or adhesive to ensure good bonding with the inner region of elastomeric material.

Preferably, the core has a flexural E-modulus of between 50 GPa and 300 GPa. Suitable materials for the rigid core include metals, such as stainless steel, non-ferrous alloys, titanium, aluminium or a composite thereof. In one embodiment of the invention, the core is hollow. Alternatively the core may be solid.

In a preferred embodiment of the invention, that portion of the outer region which extends over the end face of the inner region is so shaped as to provide a space into which into which the elastomeric material of the covering may be deformed as a result of a sealing force between the roller and a sealing surface of the apparatus. Alternatively, the sealing surface may be provided with a space for the same purpose. The outer region may be formed in two parts. A first part may extend over the end face of the inner region while a second part extends along the outer surface of the roller. The two parts of the outer region may be formed by separate vulcanisation steps.

In use in a photographic sheet material processing apparatus, one roller is positioned parallel to and in contact with another roller to form a squeegee pair. In order to obtain good processing quality it is advantageous for the rollers at the exit of each vessel of the apparatus to exert a load in the order of 0.001 to 1.0 N/mm roller length, preferably 0.025 - 0.5 N/mm, to remove excess processing materials, the load practically being applied at each end of the rollers. To this end the rollers are biased together, making use of the intrinsic elasticity of the elastomeric material. Alternatively, use may be made of springs which act on the ends of the roller shafts. The springs may be replaced by alternative equivalent compression means, such as e.g. a pneumatic or a hydraulic cylinder.

In a particular embodiment of the invention, the inner and/or the outer region has a variable thickness to provide the roller with a radial dimension profile which varies along the length thereof. This may be achieved by grinding the respective region to provide the roller with the predetermined profile. As an alternative, the rigid core may be provided with a diameter which varies along the length thereof. It is preferred that both rollers of a roller pair have the same radial dimension profile for ease of manufacturing. Ideally, the radial dimension profile of each roller is such in relation to the biasing force applied to the rollers that the force applied by the rollers to sheet material passing there-between is substantially even over the width thereof.

The radial dimension of each roller ideally decreases towards the ends thereof i.e. a convex profile, especially a parabolic profile. Ideally, the radial dimension profile of such a roller is such that the force applied by the roller to sheet material passing through the nip is substantially even over the width thereof.

In a preferred embodiment of the invention, the rollers are substantially equal in length. One or both of the rollers may constitute drive rollers for driving the sheet material along the sheet material path. Alternatively, the rollers may be freely rotating, alternative drive means being provided to drive the photographic sheet material through the apparatus.

The invention is applicable both to apparatus comprising a plurality of treatment vessels, so arranged to define a substantially horizontal sheet material path through the apparatus, and to an apparatus comprising a plurality of treatment vessels, so arranged to define a substantially vertical sheet material path through the apparatus.

### DETAILED DESCRIPTION OF THE INVENTION

The invention will be described by the following illustrative embodiments with reference to the accompanying drawings without the intention to limit the invention thereto, and in which:
Figure 1 is a cross-sectional view of a processing roller suitable for use in a horizontal photographic material processing apparatus;
Figure 2 is an elevational view of part of a horizontal photographic material processing apparatus according to the present invention, using processing rollers as shown in Figure 1; and
Figure 3 is, in solid lines, a cross-sectional view of one vessel of a vertical processing apparatus according to the invention, with adjacent vessels being partly shown in broken lines.

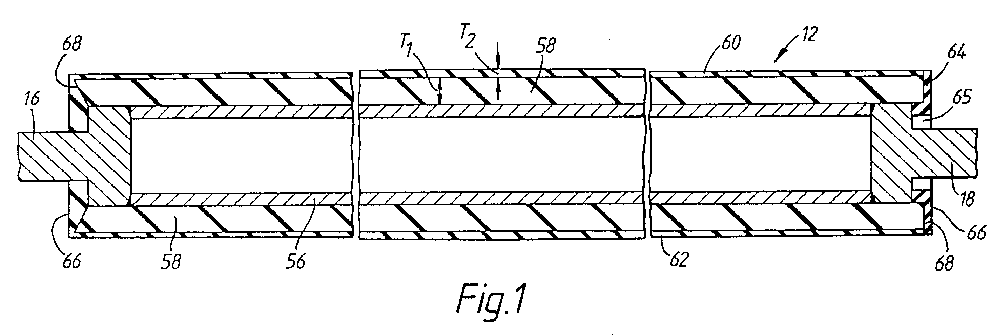

Referring to Figure 1, which is not drawn to scale, a roller 12 comprises a stainless steel rigid core 56, an inner or intermediate region of elastomeric material 58 positioned over the core, and an outer region of elastomeric material 60 positioned over the intermediate region. No other regions are present, so that the intermediate region 58 is directly in contact with the core and with the outer region 60.

In the described and illustrated embodiment, the core 56 is in the form of a hollow stainless steel cylinder having an outside diameter of 25 mm and a wall thickness of 3 mm.

The intermediate region 58 has a thickness *T*_{*1*} of 6.5 mm (amounting to about 16% of the roller diameter) and is formed of EPDM having a Shore-A hardness of 24.

The outer region 60 is also formed of EPDM, but in this case the Shore-A hardness is 50. The outer region 60 has a variable thickness *T*_{*2*} to provide the roller with a radial dimension profile which varies along the length thereof.

To form the roller shown in Figure 1, the intermediate region 58 is formed over the rigid core by coating an adhesive primer on the core and then applying non-vulcanised EPDM thereto. A plastic tape is then tightly applied over the EPDM to squeeze out any excess air. The assembly is placed in an autoclave at a pressure of 6 to 7 bar and at a temperature of 160 to 180°C for 1 to 2 hours in the presence of sulphur or a peroxide, to ensure vulcanisation. After removing the assembly from the autoclave and cooling, the intermediate region 58 is ground to the desired profile. Thereafter, the outer region 60 is formed by a similar process, followed by machining to ensure the desired profile, in this example a parabolic profile where the thickness of the outer region 60 varies from 0.5 mm at each end of the roller to 1.0 mm in the centre of the roller, thereby giving an overall roller diameter which varies from 39 mm at the ends to 40 mm at the centre. The roller typically has a length of 850 mm.

Figure 1 illustrates two possible embodiments of the invention. As shown at the right hand end of Figure 1, a separate portion 64 of the outer region extends over the end face 68 of the inner region and this portion of the outer region of elastomeric material is formed of EPDM incorporating about 15% by weight of TISMO D potassium titanate whiskers. The portion 64 is so shaped as to provide a space 65 into which the elastomeric material of the covering may be deformed as a result of a sealing force between the roller and a sealing surface of the apparatus. In this embodiment, the outer region is thus formed in two portions, namely a sleeve portion 62 which extends along the outer surface of the roller and an end portion 64 which extends over the end face 68 of the inner region 58. The two portions of the outer region may be formed by separate vulcanisation steps. In the embodiment shown at the left hand end of Figure 1, the outer region 60 itself extends over the end face 68 of the inner region 58. In this embodiment the whole of the outer region 60 is formed of EPDM incorporating about 15% by weight of TISMO D potassium titanate whiskers. In both these embodiments, shafts 16, 18 are suitably welded to the end of the core 56, or are integral therewith. Whatever construction is used for the ends of the roller, it is advantageous to mask the intermediate region 58 from processing liquids used in the apparatus in which the roller is incorporated, so as to reduce chemical attack on the more chemically sensitive material of the intermediate region.

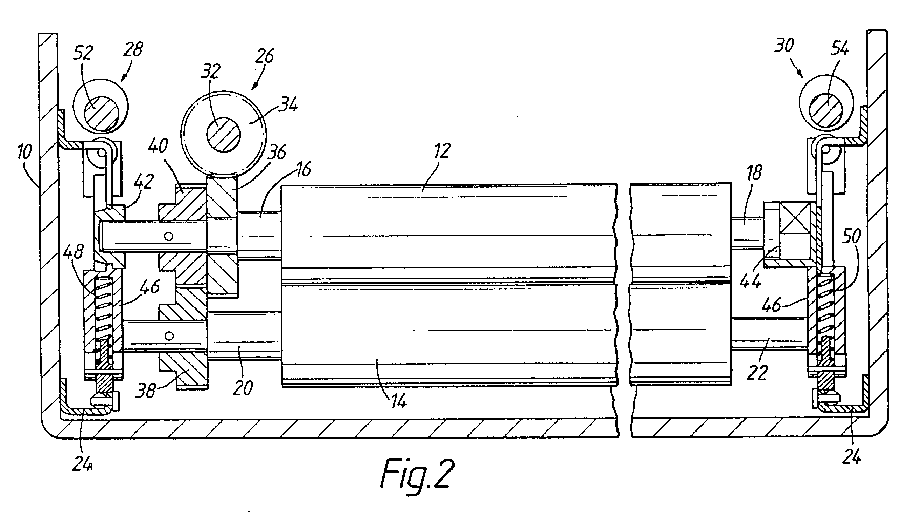

Referring to Figure 2, part of a photographic sheet material processing apparatus, of the type described in EP-A-410500 referred to above, is shown. The processing apparatus is mounted within a generally rectangular housing 10 which may include a rectangular metal mainframe (not shown in Figure 2 for the sake of clarity) for supporting the various sections of the apparatus. The apparatus includes a number of treatment vessels, sheet material to be processed being passed from one vessel to the next by squeegee roller pairs, which also serve as drive rollers. One such roller pair is shown in Figure 2, namely an upper squeegee roller 12 and a lower squeegee roller 14. The upper roller 12 is constructed as shown in Figure 1. The lower roller 14 is similarly constructed. The rollers 12 and 14 are positioned substantially parallel and in line contact with each other. The upper roller 12 is fixed on respective shafts 16 and 18 for rotation and the lower roller 14 is fixed on respective shafts 20 and 22 for rotation. The roller shafts 16, 18, 20, 22 are mounted at each end in bearings held in respective sub-frames 24.

A drive device 26 for the rollers comprises a mechanical transmission for driving said processing roller 12 and a set of cooperating gears located at one end and at the same side of both roller shafts 16, 20. The upper processing roller 12 is driven at one end thereof through a worm-screw 34 and a worm-wheel 36 by a drive shaft 32, which links all upper rollers in the apparatus. The lower processing roller 14 is driven by a helical gear 38 which meshes with another helical gear 40. The drive shaft 32 is driven preferably by an electric motor with an encoding disc system (not shown) in order to control the speed and the progressing horizontal position of the sheet material.

The coordinates of the upper processing roller 12 are defined by the end bearings 42 and 44. The lower roller 14 rotates in two bearing plates 46 which slide vertically in guides (not shown) in the sub-frames 24 so that the lower roller 14 is free to move towards and away from the upper roller 12.

The roller shafts are biased towards each other to exert a pressure on the photographic sheet material as it passes between the rollers. Compression springs 48, 50 bias the lower roller 14 towards the upper roller 12 by a force of up to 400 N at a roller length of about 850 mm.

The profile of roller 12 is such that, where the lower roller 14 is similarly constructed and a biasing force of 380N/850mm is applied by the springs 48 and 50, the force applied by the rollers to an aluminium lithographic sheet material having a thickness of 0.1 to 0.4 mm passing between the rollers is substantially even over the width thereof.

A roller displacement device generally indicated by reference 28 and 30 is also shown. The camshafts 52, 54 are each driven by a synchronised electric motor with an encoding disc system (not shown) in order to control the vertical displacement of the displaceable processing roller 14.

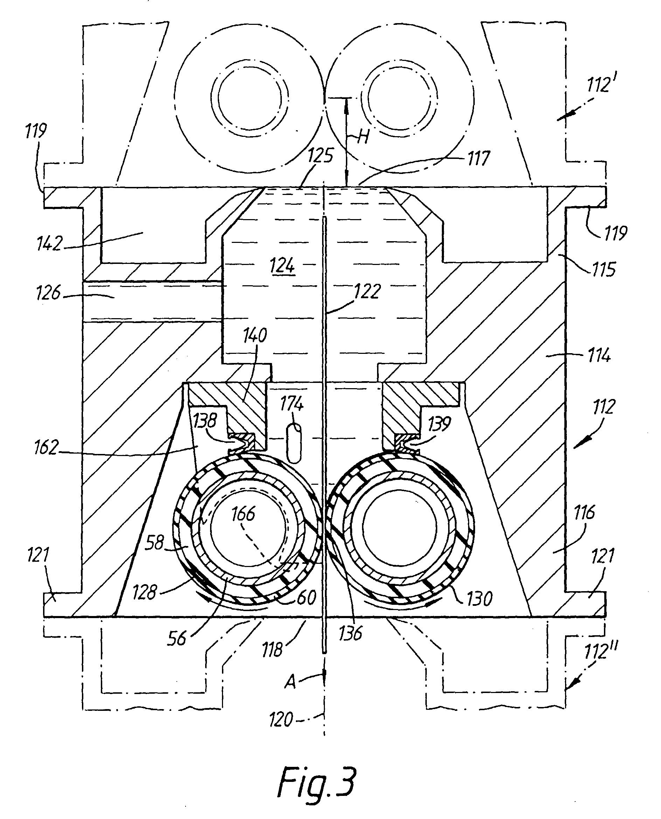

The rollers illustrated in Figure 1 are also suitable for use in a vertical processing apparatus, one embodiment of which is shown in Figure 3. As shown in Figure 3, each vessel 112 comprises a housing 114 which is of generally rectangular cross-section and is so shaped as to provide an upper part 115 having an upper opening 117 and a lower part 116 having a lower opening 118. The upper opening 117 constitutes a sheet material inlet and the lower opening 118 constitutes a sheet material outlet. The inlet and outlet define there-between a substantially vertical sheet material path 120 through the vessel 112, the sheet material 122 moving in a downwards direction as indicated by the arrow A. The sheet material preferably has a width which is at least 10 mm smaller than the length of the nip, so as to enable a spacing of at least 5 mm between the edges of the sheet and the adjacent limit of the nip, thereby to minimise leakage. Each vessel 112 may contain treatment liquid 124, a passage 126 in the housing 114 being provided as an inlet for the treatment liquid 124. The lower opening 118 is closed by a pair of rotatable rollers 128, 130 carried in the apparatus.

Each roller 128, 130 is of the squeegee type as illustrated in Figure 1, comprising a stainless steel hollow core 56 carrying inner and outer elastomeric coverings 58, 60. The rollers 128, 130 are mounted between end plates 162, which constitute sealing surface in contact with the end faces 66 of the rollers. The rollers 128, 130 are biased towards each other with a force sufficient to effect a liquid tight seal but without causing damage to the photographic sheet material 122 as it passes there-between. The line of contact between the rollers 128, 130 defines a nip 136. The rollers 128, 130 are coupled to drive means (not shown) so as to constitute drive rollers for driving the sheet material 122 along the sheet material path 120.

In the illustrated embodiment, each roller 128, 130 is in sealing contact along its length, with a respective stationary sealing member 138, 139 carried on a sealing support 140, which in turn is secured to the housing 114 of the vessel 112, the treatment liquid 124 being retained in the vessel 112 by the rollers 128, 130 and the sealing members 138, 139. The sealing members 138, 139 are formed of PTFE and have a composite structure. The sealing members 138, 139 are secured to the sealing support 140 by a suitable, water- and chemical-resistant adhesive, such as a silicone adhesive. By the use of a material of relatively high hardness for the outer region 60 of the rollers, the wear resistance between the surface of the rollers and the sealing members 138, 139 is reduced.

The upper and lower housing parts 115, 116 are provided with flanges 119, 121 respectively to enable the vessel 112 to be mounted directly above or below an identical or similar other vessel 112', 112'', as partly indicated in broken lines in Figure 3. The upper housing part 115 is so shaped in relation to the lower housing part 116 as to provide a substantially closed connection between adjacent vessels. Thus, treatment liquid from vessel 112 is prevented from falling into the lower vessel 112'' by the rollers 128, 130 and sealing members 138, 139, while vapours from the lower vessel 112'' are prevented from entering the vessel 112 or escaping into the environment. This construction has the advantage that the treatment liquid in one vessel 112 is not contaminated by contents of the adjacent vessels and that by virtue of the treatment liquids being in a closed system evaporation, oxidation and carbonization thereof is significantly reduced.

The upper part 115 of the housing 114 is so shaped as to define a leakage tray 142. Any treatment liquid which may pass through the roller nip of the next higher vessel 112', in particular as the sheet material 122 passes therethrough, drips from the rollers of that vessel and falls into the leakage tray 142 from where it may be recovered and recirculated as desired. The distance H between the surface 125 of the liquid 124 and the nip of the rollers of the next upper vessel 112' is as low as possible.

Each of the end plates 162 is so shaped as to have a circumferential line around the shafts of the rollers 128, 130 to enable the end plate to be in face-to-face contact with the end faces 66 of the rollers. At its lowest point, the edge 166 is below the level of the nip 136. The end faces 66 of the rollers are biased against the end plates 162 with a force of from 2 to 500 g/cm of contact between the end plate and the end face of the roller as measured at the surface of the roller.

The end plates 162 each include an aperture 174, the lower edge of which is positioned below the top of the rollers 128, 130, enabling the bulk of the treatment liquid 124 to flow out of the vessel at each end thereof, to be recirculated as desired.

## Claims

1. A photographic sheet material wet processing apparatus for the wet processing of photographic sheet material including at least one treatment vessel within which is located a roller biased towards a reaction surface to form a nip therebetween through which a sheet material path extends, wherein said roller comprises an outer region of elastomeric material, at least a portion of which contains potassium titanate whiskers.

2. An apparatus according to claim 1, wherein said outer region comprises a sleeve portion and at least one end portion.

3. An apparatus according to claim 2, wherein said potassium titanate whiskers are contained in said sleeve portion.

4. An apparatus according to claim 2, wherein said potassium titanate whiskers are contained in said at least one end portion.

5. An apparatus according to claim 4, wherein said roller is mounted between sealing surfaces which are in contact with end faces thereof.

6. An apparatus according to claim 1, wherein said roller further comprises an inner region of elastomeric material having a hardness lower than that of said outer region.

7. An apparatus according to claim 6, wherein said outer region extends over end faces of said inner region.

8. An apparatus according to claim 7, wherein that portion of said outer region which extends over said end face of said inner region is so shaped as to provide a space into which said elastomeric material of said covering may be deformed as a result of a sealing force between said roller and a sealing surface of said apparatus.

9. An apparatus according to claim 1, wherein said outer region is formed of an elastomeric material selected from ethylene/propylene/diene terpolymers, silicone rubber, polyurethane, thermoplastic rubber, styrene-butyl rubber, nitrile-butyl rubber.

10. An apparatus according to claim 1, wherein said reaction surface is constituted by a further roller.

11. A method of wet processing photographic sheet material by passing said sheet material along a sheet material path through an apparatus including a roller biased towards a reaction surface to form a nip therebetween through which said sheet material path extends, wherein said roller comprises an outer region of elastomeric material, at least a portion of which contains potassium titanate whiskers.
